# EUROPEAN PATENT SPECIFICATION

(11) **EP 2 743 310 B1**
(45) Date of publication and mention of the grant of the patent: **03.10.2018**
(21) Application number: 12821810.4
(22) Date of filing: 09.08.2012
(51) Int. Cl.: C08L 33/04, C08F 20/10, C09K 9/02, C08J 5/18, C09D 133/14, C08F 220/18

(54) **PHOTOCHROMIC FILM AND MANUFACTURING METHOD THEREOF**
PHOTOCHROMER FILM UND HERSTELLUNGSVERFAHREN DAFÜR
FILM PHOTOCHROMIQUE ET PROCÉDÉ DE FABRICATION DE CELUI-CI

(30) Priority: 11.08.2011 KR 20110080098; 09.08.2012 KR 20120087080
(43) Date of publication of application: 18.06.2014
(73) Proprietor: LG Chem, Ltd., Seoul 150-721 (KR)
(72) Inventor: LEE, Hanna, Yuseong-gu, Daejeon 305-380 (KR); KIM, Woosung, Daejeon 305-509 (KR); HONG, Young Jun, Seoul 121-030 (KR); KWON, Wonjong, Daejeon 305-390 (KR)
(74) Representative: Goddar, Heinz J.
(86) International application number: PCT/KR2012/006334
(87) International publication number: WO 2013/022282

(56) References cited:
- WO-A2-2010/056082
- KR-A- 20090 118 805
- KR-B1- 100 855 216
- KR-B1- 100 860 264
- KR-B1- 100 973 127
- US-A1- 2007 052 922
- US-A1- 2010 213 422
- US-A1- 2010 295 003

## Description

The present invention relates to a photochromic film and a method of manufacturing the same. More particularly, the present invention relates to a method of manufacturing a photochromic film by a continuous process, and a photochromic film manufactured by using the same.

### [Background Art]

A photochromism means a reversible function where a color is changed by radiation of light and is turned back to an original color in the absence of light, and is used for various purposes.

A method of coating a solvent type composition has been generally used as a method of manufacturing a photochromic film. However, a coating method using the solvent type photochromic composition has problems in that it is difficult to increase a thickness because the solvent is used and weather resistance and durability are poor. In other words, in the case where the film is manufactured by using the solvent type photochromic coating solution, a continuous process may be feasible, but there is a limit in increasing weather resistance and durability.

Examples of a method of improving durability comprise a method of adding a non-solvent casting composition between two glass plates and thermally curing the composition. However, since the casting method should be performed by a batch method, continuity is reduced, thus, there is a limit in a processing speed. In other words, in the casting method, it is possible to manufacture the film having high weather resistance without using the solvent, but there is a problem in that processing cost is high.

US 2010/295003 A1 discloses a photochromic composition for manufacturing photochromic film used for transparent article. The composition comprises a coating composition comprising an acrylate-based monomer, a photochromic dye and a photoinitiator.

US 2010/213422 A1 discloses a photochromic coating composition comprising acrylate-based monomers, dye and photoinitiators.

WO 2010/056082 A2 discloses photochromic films comprising a coating composition made out of diacrylate of propylene oxide modified bisphenol A, ethyleneglycol diacrylate dye and photoinitiators.

### [Disclosure]

### [Technical Problem]

In order to solve the above-mentioned problems in the related art, the present invention is directed to provide a photochromic composition that can manufacture a film by a continuous process and provide a photochromic film having excellent weather resistance and durability, and the photochromic film manufactured by using the same.

### [Technical Solution]

In order to accomplish the aforementioned object, an exemplary embodiment of the present invention provides a method of manufacturing a photochromic film, comprising:
coating a photochromic composition comprising an acrylate-based monomer, a photochromic dye, and a photoinitiator on a substrate,
wherein the photochromic composition is a non-solvent type, and
the acrylate-based monomer comprises a multifunctional (meth)acrylate-based monomer having two or more functional groups and a monofunctional acrylate-based monomer,
UV curing the coated photochromic composition, and
removing the substrate,
   wherein a viscosity of the photochromic composition is 50 to 100,000 mPas (50 to 100,000 cps), and
   wherein the monofunctional acrylate-based monomer comprises one or two kinds or more_ monomers selected from the group consisting of ethyl hexyl acrylate (EHA), phenoxy ethyl acrylate (PEA), and tetrahydroperfuryl acrylate (THFA).

Another exemplary embodiment of the present invention provides a photochromic film manufactured by the method of manufacturing the photochromic film.

Provided is a photochromic composition comprising: an acrylate-based monomer, a photochromic dye, and a photoinitiator, wherein a viscosity is 50 to 100,000 mPas (50 to 100,000 cps).

Further embodiments are disclosed in the dependent claims.

### [Advantageous Effects]

Since a photochromic composition according to the present invention is a non-solvent type composition and is capable of being used in a coating method, it is easy to control a thickness of a film, and the film can be manufactured to have a large area as compared to a coating method using a known solvent type composition or a casting method using a non-solvent type composition, thus providing the photochromic film having excellent durability and weather resistance. Further, since the photochromic composition according to the present invention may be applied to a continuous process, there is an effect that a processing cost is low. Further, it is possible to manufacture the photochromic film using only UV at low intensity.

### [Brief Description of the Drawings]

FIG. 1 shows a test comparison result of weather resistances of photochromic films manufactured in the Examples.
FIG. 2 is a spectrum of a black UV lamp.
FIG. 3 is a spectrum of a mercury UV lamp.

### [Best Mode]

Hereinafter, the present invention will be described in detail.

A method of manufacturing a photochromic film according to the present invention comprises coating a photochromic composition comprising an acrylate-based monomer, a photochromic dye, and a photoinitiator on a substrate, UV curing the applied photochromic composition, and removing the substrate.

In the present invention, the photochromic composition is a non-solvent type, and comprises the acrylate-based monomer, the photochromic dye, and the photoinitiator.

Since the photochromic composition does not adopt the solvent, viscosity of the composition may be highly maintained as compared to the case of using the solvent. The viscosity of the photochromic composition is 50 to 100,000 mPas (50 to 100,000 cps). If the viscosity is 50 mPas (50 cps) or more, the film is favorably made thick to have a thickness of 30 micrometers or more, and if the viscosity is 100,000 mPas (100,000 cps) or less, leveling and wetting properties to be used in a coating method are favorably ensured. Further, the viscosity of the photochromic composition may be preferably 100 to 10,000 mPas (100 to 10,000 cps), and more preferably 100 to 5,000 mPas (100 to 5,000 cps). Even more preferably, the viscosity 120 to 1,000 mPas (120 to 1,000 cps).

In the present invention, the acrylate-based monomer may be appropriately selected in order to maintain the viscosity. In addition, in the present invention, since a material for forming the photochromic film is not a polymer but a monomer, the film may be formed without using a solvent, such that as compared to the case where the film is formed by adding the solvent to the polymer, the occurrence of a matrix pore that may be formed during a film forming process may be reduced. Accordingly, the density of the photochromic film according to the present invention is relatively large.

A multifunctional (meth)acrylate-based monomer having two or more functional groups is used. In the present specification, (meth)acrylates may be understood to comprise both acrylates and methacrylates. The multifunctional (meth)acrylate-based monomer having two or more functional groups may provide a free volume that is capable of causing a structural change of the photochromic dye and a structure in which oxygen transmittance is low, thus providing excellent durability. Specifically, in the photochromic film, a spiro-oxazine-based or naphtopyran-based organic compound is used as the photochromic dye, and these photochromic films are colored by ring opening of the dyes by UV radiation, and ring closing occurs when the UV radiation is stopped, thus, the photochromic film is decolored. In the ring opening state showing the color, the photochromic dye is subjected to photooxidation by peroxide radicals formed by oxygen to allow the compound to start to be decomposed. Accordingly, a reduction in oxygen transmittance of the photochromic film plays an important role in improving the durability of the film. In the present invention, the multifunctional (meth)acrylate-based monomer having two or more functional groups is used as the component of the photochromic composition, and this monomer provides a free volume that is capable of causing a structural change of the photochromic dye and a structure in which oxygen transmittance is low.

A bisphenol A-based acrylate monomer, a polyalkylene glycol-based di(meth)acrylate, and other multifunctional acrylate monomers may be used as the multifunctional (meth)acrylate-based monomer having two or more functional groups, and the monomers may be used alone or as a mixture of two kinds or more thereof. In the present invention, the multifunctional (meth)acrylate-based monomer having two or more functional groups may be comprised in an amount of 50 wt% or more, preferably 70 wt% or more, and more preferably 80 wt% or more in the photochromic composition of the present invention. If the amount of the multifunctional (meth)acrylate-based monomer is 50 wt% or more in the photochromic composition of the present invention, durability of the film is improved.

Di(meth)acrylate may be preferably used as the bisphenol A-based acrylate monomer, and specific examples thereof comprise BP4PA (diacrylate of propylene oxide modified bisphenol A, KYOEISHA Chemical Co., Ltd.) and the like.

For example, bisphenol A ethoxylate di(meth)acrylate comprising an ethoxy group of 2 to 20 repeating units, bisphenol A propoxylate di(meth)acrylate comprising a propoxy group of 2 to 20 repeating units, bisphenol A alkoxylate di(meth)acrylate comprising an epoxy group and a propoxy group of 2 to 20 repeating units, bisphenol A glycerollate dimethacrylate, bisphenol A glycerollate (1 glycerol/phenol) dimethacrylate, or a mixture thereof may be used as polyalkylene glycol-based di(meth)acrylate.

In addition, dipentaerythritol hexaacrylate (DPHA), dipentaerythritol hydroxy pentaacrylate, pentaerythritol tetraacrylate, pentaerythritol triacrylate, trimethylene propyl triacrylate (TMPTA), propoxylated glycerol triacrylate, trimethylpropane ethoxy triacrylate, or a mixture thereof may be used as the multifunctional acrylate monomer.

To be more specific, it is preferable to use BP4PA, ethylene glycol diacrylate (EGDA), ethylene glycol dimethacrylate (EGDMA), dipentaerythritol hexaacrylate (DPHA), and trimethylene propyltriacrylate (TMPTA) as the multifunctional (meth)acrylate-based monomer having two or more functional groups, and in particular, it is preferable to use a mixture of BP4PA, ethylene glycol diacrylate (EGDA), and ethylene glycol dimethacrylate (EGDMA).

In the photochromic composition according to the present invention, it is preferable that the long chain monomer that is positioned between the double bonds of the functional groups and has 15 or more C-C bonds be comprised in an amount of 50 wt% or more, preferably 70 wt% or more, and more preferably 80 wt% or more based on whole monomers. Examples of the long chain monomer comprise BP4PA, 9-ethyleneglycol diacrylate (9-EGDA) or the like. In addition, it is preferable that in the photochromic composition according to the present invention, the short chain monomer that is positioned between the double bonds of the functional groups and has less than 15 C-C bonds be comprised in an amount of less than 50 wt% based on the whole monomers. Examples of the short chain monomer comprise ethyleneglycol dimethacrylate, hexaacrylate, pentaacrylate, triacrylate or the like.

In the present invention, a monofunctional acrylate-based monomer having one functional group is further comprised in addition to the multifunctional (meth)acrylate-based monomer having two or more functional groups. If the monofunctional acrylate-based monomer is comprised, processability may be controlled and appropriate crosslinking and structure of the film may be implemented during formation of the film. Therefore, since the photochromic film may have a structure where oxygen transmittance is low, durability of the photochromic film may be improved. Further, the monofunctional acrylate-based monomer helps to disperse the additive or the dye.

The monofunctional acrylate-based monomer comprises ethyl hexyl acrylate (EHA), phenoxy ethyl acrylate (PEA), and tetrahydrofurfuryl acrylate (THFA) and the like.

The monofunctional acrylate-based monomer may be comprised in an amount of 50 wt% or less, preferably 30 wt% or less, and more preferably 20 wt% or less based on the photochromic composition of the present invention. In the case where the monofunctional acrylate-based monomer is used in an amount of 50 wt% or less based on the photochromic composition of the present invention, durability of the film is improved.

In the present invention, the composition may further comprise an acrylate-based oligomer. A matter manufactured or commercialized by a method known in the art may be used as the acrylate-based oligomer, and may be manufactured by reacting the multifunctional acrylate-based monomer or reacting a urethane-based acrylate monomer. Specifically, examples of the acrylate-based oligomer comprise EB745, EB9260, EB8402 and the like that can be purchased from SK CYTEC Co., Ltd., but are not limited thereto. The acrylate-based oligomer may be comprised in an amount of 50 wt% or less, preferably 30 wt% or less, and more preferably 20 wt% or less based on the photochromic composition of the present invention.

The photochromic composition according to the present invention may adopt the acrylate-based monomer, thus, the photochromic film may be cured by radiating UV having a long wavelength. In the related art, since monomers such as styrene or divinylbenzene comprising a vinyl group are used, heat curing needs to be performed over a long period of time, but in the present invention, curing can be performed for a short time by using UV even in the case of the thick film.

In the present invention, since the photochromic composition does not adopt the solvent as described above, the photoinitiator may be used in a smaller amount. In the related art, 1 wt% or more of the photoinitiator needs to be used based on the whole composition, but in the present invention, even though 0.1 to 0.5 wt% of the photoinitiator is used, the photochromic film may be sufficiently cured.

Examples of the photoinitiator comprise a α-hydroxyketo-type photoinitiator and a phosphine oxide-type photoinitiator, and one kind of photoinitiator may be used or two kinds or more photoinitiators may be used while being mixed or combined with each other.

Examples of the α-hydroxyketo-type photoinitiator comprise 1-hydroxycyclohexyl phenyl ketone (for example, Igarcure 184 that can be purchased from Ciba Geigy Co., Ltd. and Chivacure 184 that can be purchased from Chitec Chemicals Co., Ltd.), 2-hydroxy-2-methyl-1-phenyl-propane-1-on(for example, Darocur 1173 that can be purchased from Ciba Geigy Co., Ltd.), 2-benzyl-2-dimethylamino-1-(4-morpholinophenyl)-butane-1-on, 2,2-dimethoxy-2-phenyl-acetophenone, 2-methyl-1-[4-(methylthio)phenyl]-2-(4-morpholinyl)-1-propanon, 2-methyl-1-[4-(methylthio)phenyl]-2-morpholinopropane-1-on (for example, Igarcure 907 that can be purchased from Ciba Geigy Co., Ltd.), 4-(2-hydroxyethoxy)phenyl-2-hydroxy-2-propyl ketone dimethoxy-phenylacetophenone, 1-(4-isopropylphenyl)-2-hydroxy-2-methyl-propane-1-on, and 1-(4-dodecylphenyl)-2-hydroxy-2-methylpropane-1-on and 4-(2-hydroxyethoxy)phenyl-2-(2-hydroxy-2-propyl)ketone.

Examples of the phosphine oxide-type photoinitiator comprise 2,4,6-trimethylbenzoyldiphenylphosphine oxide type (TPO, for example, Lucirin TPO that can be purchased from BASF Co., Ltd. and Darocur TPO that can be purchased from Ciba Geigy Co., Ltd.), bis-(2,4,6-trimethylbenzoyl)phenyl-phosphine oxide (for example, Igarcure 819 that can be purchased from Ciba Geigy Co., Ltd.), or bisacylphosphine oxide type (BAPO) photoinitiator.

In the present invention, the photoinitiator may be Darocur TPO, Igarcure 184, or Igarcure 819.

In the present invention, anything known in the art may be used as the photochromic dye, and for example, spiropyran-based, fulgide-based, fulgimide-based, azo-benzene-based, viologen-based, spiro-oxazine-based, naphtopyran-based, or chromene-based organic compounds may be used. In the present specification, a predetermined chemical structure-based compound is a compound comprising the chemical structure as a core structure, and comprises all of a compound comprising only the chemical structure and a derivative thereof. In the present invention, it is more preferable to use the spiro-oxazine-based or naphtopyran-based compound. The photochromic dye may be used in an amount of 0.01 wt% to 5 wt%, and preferably 0.1 wt% to 3 wt% based on the whole composition.

The photochromic composition according to the present invention may comprise an additive within a range in which the purpose of the present invention is not obstructed. For example, a polymerization initiator, a stabilizer, a UV absorbing agent, an antioxidant, a chain transferring agent, an IR absorbing agent, an antifoaming agent, an antistatic agent, a release agent and the like may be added thereto. Each of these additives may be used in an amount of 0.01 wt% to 5 wt%.

Examples of the antioxidant may comprise phenols, hydroxylamines, lactones and the like as a radical scavenger, and examples of the UV absorbing agent may comprise triazines, benzotriazoles, benzophenones and the like. Examples of the stabilizer may comprise a hindered amine light stabilizer. Polydimethyl siloxanes (PDMS), polysiloxane polyether copolymers, fluorine-based surface treating agents and the like may be used as the release agent.

Further, the present invention provides a photochromic film manufactured by the method of manufacturing the photochromic film. The photochromic film according to the present invention may be manufactured by coating the aforementioned photochromic composition on a substrate, UV curing the composition, and removing the substrate. Accordingly, the photochromic film according to the present invention comprises a form where at least a portion of the aforementioned acrylate-based monomer is cured by UV.

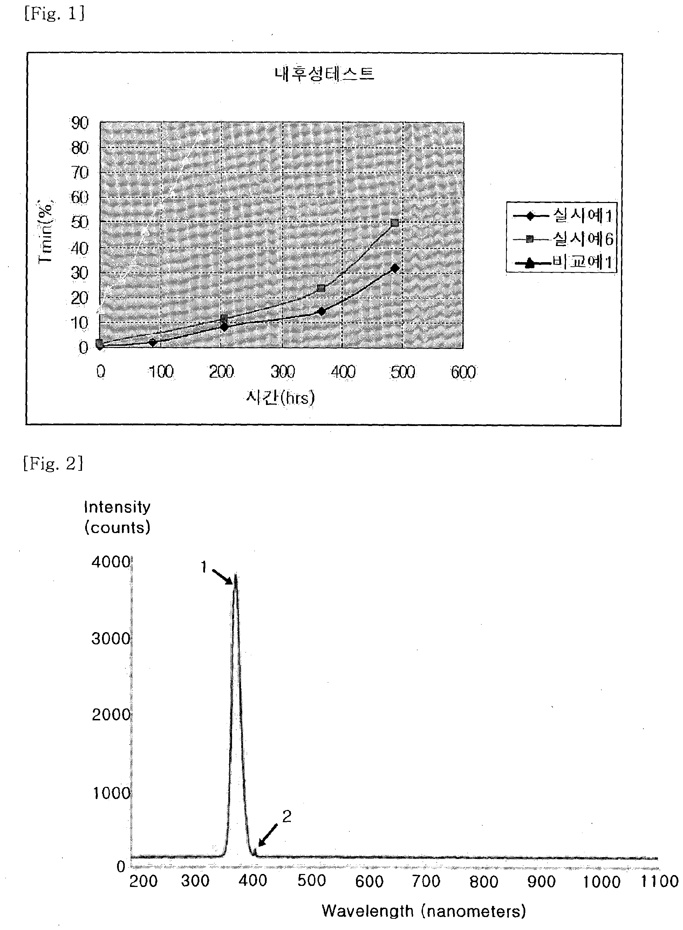

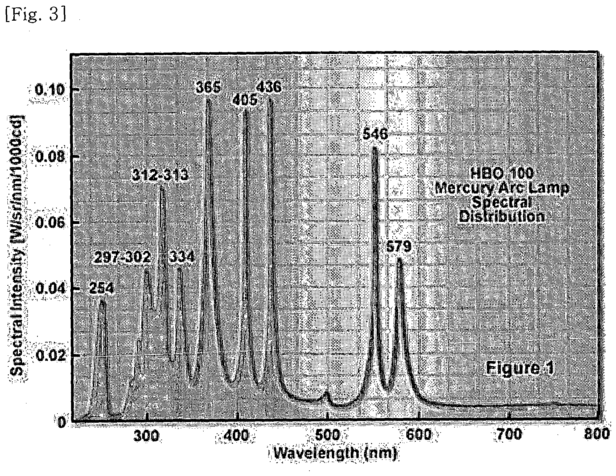

As described above, since the photochromic composition according to the present invention does not comprise the solvent, the photoinitiator may be comprised in a small amount, and UV may be radiated at low intensity during UV curing. Particularly, in the present invention, black UV may be used as the UV. In the case where the black UV is used, the photochromic film may be cured while the photochromic dye is less damaged. Like FIGS. 2 and 3, the mercury UV lamp emits light having various wavelengths, but the black UV lamp emits light having a long wavelength.

In the present invention, in the case where the black UV lamp is used, a curing condition may be optimized by selecting desired UV intensity and radiation time. For example, in the present invention, the photochromic film having excellent durability may be manufactured even though the intensity of black UV is 20 to 40 W/cm². When the intensity of black UV is higher than 20 W/cm², a curing time may be reduced to increase productivity, and when the intensity is lower than 40 W/cm², curing uniformity is improved when the film is formed. This is different from the fact that the intensity of UV needs to be 80 to 120 W/cm² in a known solvent type photochromic composition.

After the photochromic composition is applied, it is preferable that oxygen be blocked at a surface exposed to air of the coating surface. For example, after the photochromic composition is applied, the release film may be covered to block oxygen.

The photochromic film according to the present invention may be a free standing photochromic film separated from the release film after the photochromic composition is applied on the release film and UV cured.

In another exemplary embodiment of the present invention, the photochromic film may be manufactured by coating the aforementioned photochromic composition on the release film, covering the resulting film with the release film to block oxygen, curing the photochromic composition interposed between the release films by using the black UV lamp in the intensity of 20 to 40 W/cm² for 3 to 5 min, and removing the release film.

Further, the photochromic film according to the present invention may have a form where the substrate and the photochromic film are laminated by coating the aforementioned photochromic composition on the substrate and UV curing the composition. In this case, the photochromic composition may be blocked from oxygen by using the release film before the UV curing.

In this case, the acrylate-based monomer that can corrode the substrate well may be added together in order to increase adhesion with the substrate. Tetrahydroperfuryl acrylate (THFA) is preferable as the acrylate-based monomer, and the amount thereof is preferably 1 wt% to 30 wt% based on the photochromic composition.

Examples of the substrate may comprise polycarbonate (PC), polyethylene terephthalate (PET), polymethyl methacrylate (PMMA), acrylonitrile butadiene styrene (ABS) and the like.

The photochromic film according to the present invention has excellent transparency, and an optical density (transmittance at λmin) of 50% or less and more preferably 30% or less during discoloration.

A time required to increase transmittance at λmin (a wavelength value at which a transmittance value is lowest) to a half of transmittance at the time of initial discoloration is 300 hours or more and preferably 500 to 1,000 hours as an index of weather resistance. A method of exposing the sample to a cycle constituted by four steps shown in the following Table 1 by using a xenon-arc lamp in a weather-o-meter manufactured by Q-SUN Co., Ltd., which is an accelerate weathering machine at 340 nm with the intensity of 0.55 Wm⁻²nm to measure the optical density may be used in order to measure the time required to increase transmittance at λmin to a half of the transmittance at the time of initial discoloration (SAE2527).

**[Table 1]**

| | Light | Darkness | Spray |
|---|---|---|---|
| 1 | None | 60 min | Front surface and rear surface |
| 2 | 40 min/ 1.32 kJ/m²·nm | Not applied | None |
| 3 | 20 min/ 0.66 kJ/m²·mn | Not applied | Front surface |
| 4 | 60 min/1.98 kJ/m²·nm | Not applied | None |

Since a known non-solvent casting method should be performed by a batch method, continuity is reduced, thus, there is a limit in processing speed and there is a limit in length, but in the present invention, it is easy to control the thickness of the film and the film may be manufactured to have a large area by using the coating method.

The thickness of the photochromic film according to the present invention is preferably 50 to 500 micrometers and more preferably 50 to 300 micrometers, but is not limited thereto. The thickness of the film relates to viscosity of the coating composition, and in the present invention, as described above, even the thickness of 300 micrometers may be obtained by using the composition having the high viscosity as compared to the solvent type coating composition. In the case where the thickness of the photochromic film is less than 50 micrometers, durability of the film may be reduced because the thickness is small, accordingly, it is difficult to perform a role of the single film, and in the case where the thickness is more than 500 micrometers, the thickness is excessively large, accordingly, it may be difficult to perform photocuring.

In the present invention, the substrate may be a release film to be subsequently removed, or a substrate laminated with the photochromic film to be used in final products.

A method known in the art may be used as the coating method. In the present invention, since the composition having relatively high viscosity is used, it is possible to perform roll coating. Further, since the coating may be performed by a continuous process, processing cost may be largely reduced.

After the coating, a step of blocking the applied photochromic composition from oxygen before the UV curing may be further comprised.

A kind of UV may be selected according to a kind and a composition of components comprised in the composition, and in the case where the black UV lamp is used, the intensity may be 20 to 40 W/cm²,

### [Mode for Invention]

A better understanding of the present invention may be obtained in light of the following Examples which are set forth to illustrate, but are not to be construed to limit the present invention.

### <Example>

### <Example 1>

BP4PA and EHA were used as the acrylate-based monomer at a weight ratio of 8:2. Based on 100 parts by weight of these acrylate-based monomers, 0.7 parts by weight of Palatinate Purple manufactured by James Robinson Co., Ltd. as the photochromic dye, 0.8 parts by weight of Tinuvin 144 and 1.6 parts by weight of Tinuvin 292 manufactured by Ciba Geigy Co., Ltd. as the photostabilizer, and 0.5 parts by weight of Igarcure 184 manufactured by Ciba Geigy Co., Ltd. as the photoinitiator were added to manufacture the photochromic composition having viscosity of 155 cps.

The photochromic composition was applied on the release film, and then covered with the release film to block oxygen.

UV of the 20 W black UV lamp was radiated on upper and lower parts of the composition interposed between the release films to cure the composition for 3 min.

Subsequently, the release film was removed to obtain the photochromic film having the thickness of 215 micrometers. The initial transmittance and transmittance after discoloration of the obtained photochromic film were measured, and the weather resistance test was performed by using the weather-o-meter.

### <Example 2>

BP4PA, EHA, and EGDMA were used as the acrylate-based monomer at a weight ratio of 8:1:1. Based on 100 parts by weight of these acrylate-based monomers, 0.7 parts by weight of Palatinate Purple manufactured by James Robinson Co., Ltd. as the photochromic dye, 0.8 parts by weight of Tinuvin 144 and 1.6 parts by weight of Tinuvin 292 manufactured by Ciba Geigy Co., Ltd. as the photostabilizer, and 1 part by weight of Igarcure 184 manufactured by Ciba Geigy Co., Ltd. as the photoinitiator were added to manufacture the photochromic composition having viscosity of 193 cps.

The photochromic composition was applied on the release film, and then covered with the release film to block oxygen.

UV of the 20 W black UV lamp was radiated on upper and lower parts of the composition interposed between the release films to cure the composition for 3 min.

Subsequently, the release film was removed to obtain the photochromic film having the thickness of 180 micrometers. The obtained photochromic film were subjected to the weather resistance test by using the weather-o-meter.

### <Example 3>

The same procedure as Example 2 was performed, except that BP4PA, THFA, and EGDMA were used as the acrylate-based monomer at a weight ratio of 8:1:1 to manufacture the photochromic composition having viscosity of 136 cps, thus obtaining the photochromic film having the thickness of 120 micrometers.

### <Example 4> (not according to the invention)

The same procedure as Example 2 was performed, except that BP4PA, EOEOEA, and EGDMA were used as the acrylate-based monomer at a weight ratio of 8:1:1 to manufacture the photochromic composition having viscosity of 200 cps, thus obtaining the photochromic film having the thickness of 150 micrometers.

### <Example 5> (not according to the invention)

The same procedure as Example 1 was performed, except that BP4PA and 9-EGDA were used as the acrylate-based monomer at a weight ratio of 8:2 to manufacture the photochromic composition having viscosity of 814 cps, thus obtaining the photochromic film having the thickness of 200 micrometers.

### <Example 6>

The same procedure as Example 1 was performed, except that BP4PA and PEA were used as the acrylate-based monomer at a weight ratio of 8:2 to manufacture the photochromic composition having viscosity of 495 cps, thus obtaining the photochromic film having the thickness of 180 micrometers.

### <Example 7>

The same procedure as Example 1 was performed, except that BP4PA, EHA, EGDMA, and EB745 were used as the acrylate-based monomer at a weight ratio of 6:1:1:2 to manufacture the photochromic composition having viscosity of 426 cps, thus obtaining the photochromic film having the thickness of 130 micrometers.

### <Example 8>

The same procedure as Example 1 was performed, except that BP4PA, EHA, EGDMA, and EB9260 were used as the acrylate-based monomer at a weight ratio of 6:1:1:2 to manufacture the photochromic composition having viscosity of 410 cps, thus obtaining the photochromic film having the thickness of 120 micrometers.

### <Example 9>

The same procedure as Example 1 was performed, except that BP4PA, EHA, EGDMA, and EB8402 were used as the acrylate-based monomer at a weight ratio of 6:1:1:2 to manufacture the photochromic composition having viscosity of 293 cps, thus obtaining the photochromic film having the thickness of 130 micrometers.

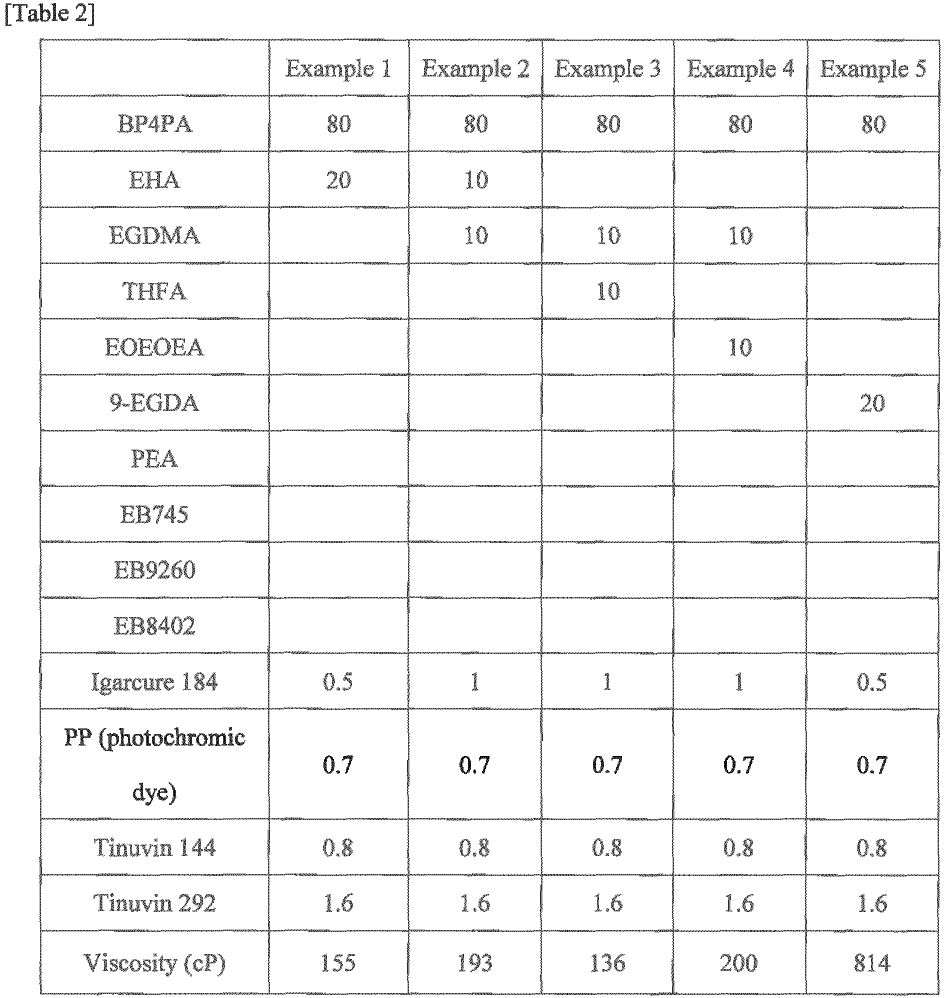

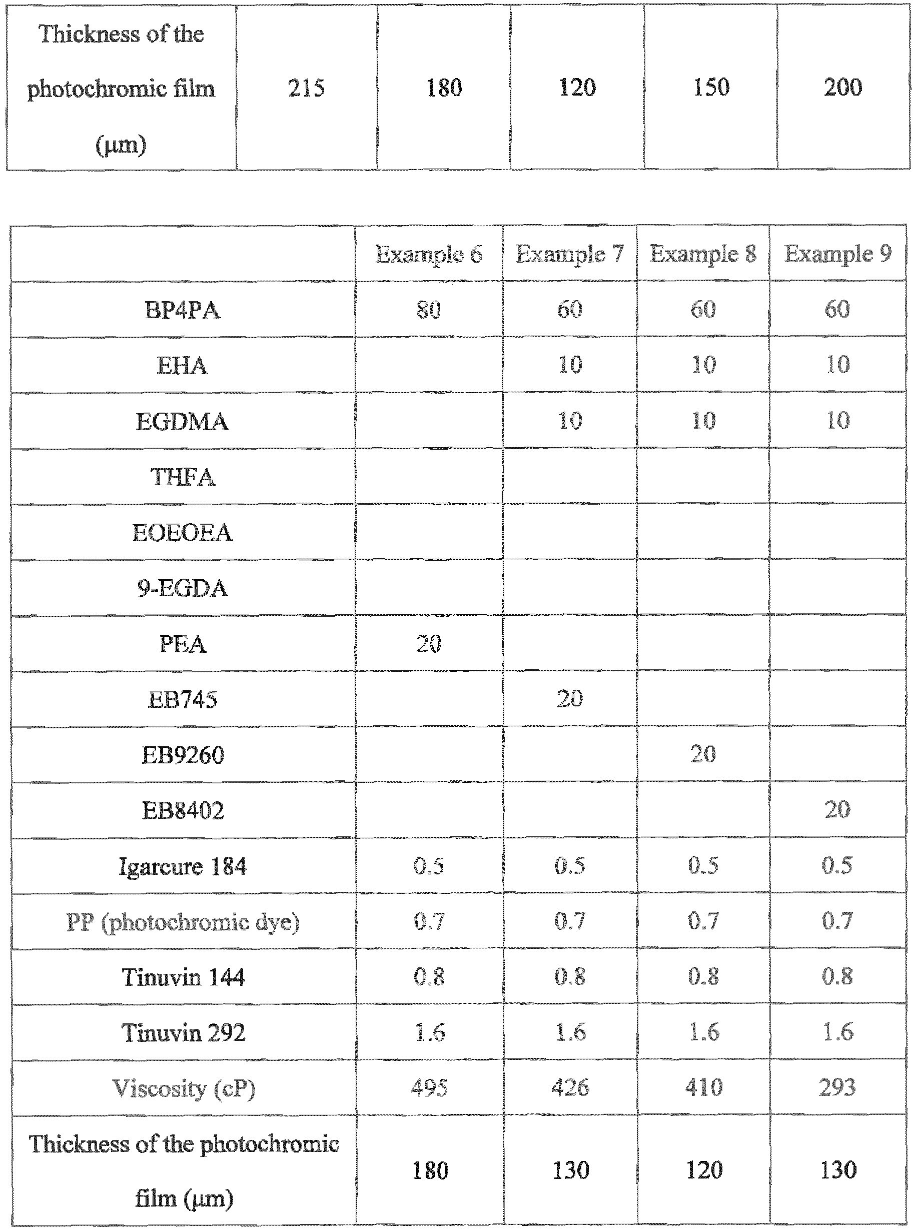

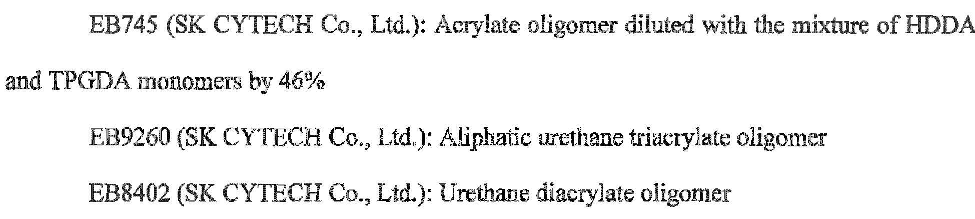

### <Comparative Example>

Based on 100 parts by weight of the whole photochromic composition, 10.31 parts by weight of polyurethane (Estane 5701 manufactured by Noveno Co., Ltd.), 58.43 parts by weight of cyclohexanone and 30.73 parts by weight of isopropyl alcohol as the solvent, and 0.53 parts by weight of Palatinate Purple manufactured by James Robinson Co., Ltd. as the photochromic dye were added to manufacture the photochromic composition.

The photochromic composition was applied on the polycarbonate film, and dried in the oven at 90°C for 5 min to partially dry the solvent, and the polycarbonate film was laminated.

Subsequently, the obtained photochromic film were subjected to the weather resistance test by using the weather-o-meter.

The weather resistance test comparison result of the photochromic films manufactured in the Examples and the Comparative Example is shown in the following FIG. 1.

As described above, since the photochromic composition according to the present invention is a non-solvent type composition and is capable of being used in a coating method, it is easy to control a thickness of a film, and the film can be manufactured to have a large area as compared to a coating method using a known solvent type composition or a casting method using a non-solvent type composition, thus providing the photochromic film having excellent durability and weather resistance. Further, since the photochromic composition according to the present invention may be applied to a continuous process, there is an effect that processing cost is low. Further, it is possible to manufacture the photochromic film using only UV at low intensity.

## Claims

1. A method of manufacturing a photochromic film, comprising:
coating a photochromic composition comprising an acrylate-based monomer, a photochromic dye, and a photoinitiator on a substrate,
wherein the photochromic composition is a non-solvent type, and
the acrylate-based monomer comprises a multifunctional (meth)acrylate-based monomer having two or more functional groups and a monofunctional acrylate-based monomer,
UV curing the coated photochromic composition, and
removing the substrate,
wherein a viscosity (measured with a viscometer model TV-22, Toki Sangyo at 22°C) of the photochromic composition is 50 to 100,000 mPas (50 to 100,000 cps), and
wherein the monofunctional acrylate-based monomer comprises one or two kinds or more monomers selected from the group consisting of ethyl hexyl acrylate (EHA), phenoxy ethyl acrylate (PEA), and tetrahydroperfuryl acrylate (THFA).

2. The method of manufacturing a photochromic film of claim 1, wherein the UV curing is performed by UV radiation at an intensity of 20 to 40 W/cm².

3. The method of manufacturing a photochromic film of claim 1, wherein the UV is a black UV.

4. The method of manufacturing a photochromic film of claim 1, further comprising:
blocking oxygen from the photochromic composition after the coating and before the UV curing, by covering the photochromic composition with a release film.

5. The method of manufacturing a photochromic film of claim 1, wherein the coating is performed by roll coating.

6. The method of manufacturing a photochromic film of claim 1, wherein the coating is performed by a continuous process.

7. The method of manufacturing a photochromic film of claim 1, wherein the multifunctional (meth)acrylate-based monomer having two or more functional groups comprises a long chain monomer that is positioned between double bonds of the functional groups and has 15 or more C-C bonds.

8. The method of manufacturing a photochromic film of claim 1, wherein the multifunctional (meth)acrylate-based monomer having two or more functional groups is comprised in an amount of 50 wt% or more based on a total weight of the photochromic composition.

9. The method of manufacturing a photochromic film of claim 1, wherein the monofunctional acrylate-based monomer is comprised in an amount of 50 wt% or less based on a total weight of the photochromic composition.

10. The method of manufacturing a photochromic film of claim 1, wherein the photoinitiator is comprised in an amount of 0.1 to 0.5 wt% based on a total weight of the photochromic composition.

11. A photochromic film manufactured by the method of manufacturing the photochromic film according to any one of claims 1 to 10.

12. The photochromic film of claim 11, wherein a thickness is 50 to 500 micrometers.

## Patentansprüche

1. Verfahren zur Herstellung eines photochromen Films, umfassend:
Beschichten eines Substrats mit einer photochromen Zusammensetzung, welche ein acrylatbasiertes Monomer, einen photochromen Farbstoff und einen Photoinitiator umfasst,
wobei die photochrome Zusammensetzung vom lösungsmittelfreien Typ ist, und
wobei das acrylatbasierte Monomer ein multifunktionelles (meth)acrylatbasiertes Monomer mit zwei oder mehr funktionellen Gruppen und ein monofunktionelles acrylatbasiertes Monomer umfasst,
UV-Härten der aufgetragenen photochromen Zusammensetzung, und
Entfernen des Substrats,
wobei eine Viskosität (gemessen mit einem Viskometer Modell TV-22, Toki Sangyo bei 22°C) der photochromen Zusammensetzung 50 - 100.000 mPas (50-100.000 cps) ist, und
wobei das monofunktionelle acrylatbasierte Monomer ein oder zwei oder mehr Monomere umfasst, ausgewählt aus der Gruppe bestehend aus Ethylhexylacrylat (EHA), Phenoxyethylacrylat (PEA) und Tetrahydroperfurylacrylat (THFA).

2. Verfahren zur Herstellung eines photochromen Films nach Anspruch 1, wobei das UV-Härten durch UV-Strahlung bei einer Intensität von 20-40 W/cm² durchgeführt wird.

3. Verfahren zur Herstellung eines photochromen Films nach Anspruch 1, wobei das UV schwarzes UV ist.

4. Verfahren zur Herstellung eines photochromen Films nach Anspruch 1, welches zusätzlich umfasst:
Blockieren von Sauerstoff von der photochromen Zusammensetzung, nach der Beschichtung und vor dem UV-Härten, durch Abdeckung der photochromen Zusammensetzung mit einer Trennfolie.

5. Verfahren zur Herstellung eines photochromen Films nach Anspruch 1, wobei die Beschichtung als Rollbeschichtung durchgeführt wird.

6. Verfahren zur Herstellung eines photochromen Films nach Anspruch 1, wobei die Beschichtung als kontinuierlicher Prozess durchgeführt wird.

7. Verfahren zur Herstellung eines photochromen Films nach Anspruch 1, wobei das multifunktionelle (meth)acrylatbasierte Monomer mit zwei oder mehr funktionellen Gruppen ein langkettiges Monomer umfasst, welches zwischen Doppelbindungen der funktionellen Gruppen positioniert ist und 15 oder mehr C-C Bindungen hat.

8. Verfahren zur Herstellung eines photochromen Films nach Anspruch 1, wobei das multifunktionelle (meth)acrylatbasierte Monomer mit zwei oder mehr funktionellen Gruppen in einer Menge von 50 Gew.-% oder mehr umfasst ist, basierend auf einem Gesamtgewicht der photochromen Zusammensetzung.

9. Verfahren zur Herstellung eines photochromen Films nach Anspruch 1, wobei das multifunktionelle acrylatbasierte Monomer in einer Menge von 50 Gew.-% oder weniger umfasst ist, basierend auf einem Gesamtgewicht der photochromen Zusammensetzung.

10. Verfahren zur Herstellung eines photochromen Films nach Anspruch 1, wobei der Photoinitiator in einer Menge von 0.1 bis 0.5 Gew.-%, basierend auf einem Gesamtgewicht der photochromen Zusammensetzung, umfasst ist.

11. Photochromer Film hergestellt nach dem Herstellungsverfahren zur Herstellung eines photochromen Films nach einem der Ansprüche 1 bis 10.

12. Photochromer Film nach Anspruch 11, wobei eine Dicke 50 bis 500 Mikrometer ist.

## Revendications

1. Procédé de fabrication d'un film photochromique, comprenant les étapes consistant à :
revêtir une composition photochromique comprenant un monomère à base d'acrylate, une teinture photochromique et un photoinitiateur sur un substrat,
dans lequel la composition photochromique est d'un type sans solvant, et
le monomère à base d'acrylate comprend un monomère à base de (méth)acrylate multifonctionnel contenant deux ou plusieurs groupes fonctionnels et un monomère à base d'acrylate monofonctionnel,
durcir aux UV la composition photochromique, et
retirer le substrat,
dans lequel une viscosité (mesurée avec un viscomètre de modèle TV-22, Toki Sangyo à une température de 22 °C) de la composition photochromique est de 50 à 100.000 mPas (50 à 100.000 cps), et
dans lequel le monomère à base d'acrylate monofonctionnel comprend un ou deux types ou plusieurs monomères sélectionnés dans le groupe constitué d'acrylate d'éthyl hexyle (EHA), d'acrylate de phénoxy éthyle (PEA) et d'acrylate de tétrahydroperfuryle (THFA).

2. Procédé de fabrication d'un film photochromique selon la revendication 1, dans lequel le durcissement aux UV est réalisé par rayonnement UV à une intensité de 20 à 40 W/cm²,

3. Procédé de fabrication d'un film photochromique selon la revendication 1, dans lequel l'UV est un UV en noir.

4. Procédé de fabrication d'un film photochromique selon la revendication 1, comprenant en outre les étapes consistant à :
bloquer l'oxygène de la composition photochromique après le revêtement et avant le durcissement aux UV, en couvrant la composition photochromique avec un film détachable.

5. Procédé de fabrication d'un film photochromique selon la revendication 1, dans lequel le revêtement est réalisé par application par rouleaux.

6. Procédé de fabrication d'un film photochromique selon la revendication 1, dans lequel le revêtement est réalisé par le biais d'un processus continu.

7. Procédé de fabrication d'un film photochromique selon la revendication 1, dans lequel le monomère à base de (méth)acrylate multifonctionnel ayant deux ou plusieurs groupes multifonctionnels comprend un monomère à chaîne longue qui est positionné entre des liaisons doubles des groupes multifonctionnels et possède 15 liaisons C-C ou davantage.

8. Procédé de fabrication d'un film photochromique selon la revendication 1, dans lequel le monomère à base de (méth)acrylate multifonctionnel ayant deux ou plusieurs groupes fonctionnels est compris en une quantité de 50 % en poids ou supérieure par rapport au poids total de la composition photochromique.

9. Procédé de fabrication d'un film photochromique selon la revendication 1, dans lequel le monomère à base d'acrylate monofonctionnel est compris en une quantité de 50 % en poids ou inférieure par rapport au poids total de la composition photochromique.

10. Procédé de fabrication d'un film photochromique selon la revendication 1, dans lequel le photoinitiateur est compris en une quantité de 0,1 à 0,5 % en poids par rapport au poids total de la composition photochromique.

11. Film photochromique fabriqué par le procédé de fabrication du film photochromique selon l'une quelconque des revendications 1 à 10.

12. Film photochromique selon la revendication 11, dans lequel une épaisseur est de 50 à 500 micromètres.
